# EUROPEAN PATENT SPECIFICATION

(11) **EP 2 639 703 B1**
(45) Date of publication and mention of the grant of the patent: **21.06.2017**
(21) Application number: 11839380.0
(22) Date of filing: 25.04.2011
(51) Int. Cl.: G06F 13/28, G06F 9/445

(54) **DEVICE FOR BOOTING SOC CHIP AND SOC CHIP**
VORRICHTUNG ZUM STARTEN EINES EIN-CHIP-SYSTEMS UND EIN-CHIP-SYSTEM
DISPOSITIF D'AMORCE DE PUCE SOC ET PUCE SOC ASSOCIÉE

(30) Priority: 08.11.2010 CN 201010535369
(43) Date of publication of application: 18.09.2013
(73) Proprietor: ZTE Corporation, Shenzhen, Guangdong 518057 (CN); Sanechips Technology Co., Ltd., Shenzhen, Guangdong 518055 (CN)
(72) Inventor: JIANG, Jianping, Shenzhen Guangdong 518057 (CN)
(74) Representative: Lavoix
(86) International application number: PCT/CN2011/073251
(87) International publication number: WO 2012/062087

(56) References cited:
- CN-A- 1 661 580
- CN-A- 1 761 222
- CN-A- 101 051 275
- US-A1- 2006 010 312
- US-A1- 2006 245 274
- US-A1- 2007 174 602

## Description

### TECHNICAL FIELD

The disclosure relates to the technical field of wireless communications, and more particularly to a boot device for a System on Chip (SoC) chip and the SoC chip.

### BACKGROUND

A SoC chip which generally includes a processor has a different working principle from an Application Specific Integrated Circuit (ASIC) chip. When working, the SoC chip needs to be supported by software which is compiled into a bit file by a compiler and then downloaded into an external memory device of the SoC chip. Generally, the memory device is a flash chip. The SoC chip is connected with the flash chip through an interface. The bit file in the flash chip will be transmitted to a memory of the processor automatically after the flash chip is powered on. The memory is an internal memory space of the processor, or may be a flash memory. The process is implemented automatically through a booting module before resetting and releasing of the processor. Both the SoC chip performance and the system performance are greatly influenced by the efficiency of transferring data in the external memory device to the memory of the SoC chip by the boot device. The debugging process of software will be accelerated by increasing the booting efficiency during a chip-level service process, thus greatly improving the working efficiency. The loading process of software of an embedded system will be accelerated by increasing the booting efficiency during a system-level service process; especially for an embedded system provided with an operation system, the acceleration of the booting process will improve the system performance. Thus, how to accelerate the booting of the SoC chip is of great importance to both chip-level services and system-level services.

US 2007/174602 A1 (KAO ROM-SHEN [US] 26 July 2007)discloses a method and apparatus for initializing a computer system. wherein the computer system includes a processor, a volatile memory, and a non-volatile memory. In one embodiment, the method includes, when the computer system is initialized, automatically copying initialization code stored in the non-volatile memory to the volatile memory, wherein circuitry in the volatile memory automatically creates the copy, and executing, by the processor the copy of the initialization code from the volatile memory.

Existing devices for realizing SoC chip booting mainly include the following two modes: first, devices have fixed bus interface parameters, so the transmitting distances and transmission addresses of such devices cannot be configured and the devices cannot be used flexibly in different processor environments; second, boot devices do not have a Direct Memory Access (DMA) interface, so the transmitting efficiency of such boot devices is low, the transmission addresses cannot be configured, and the boot devices cannot be used flexibly in different processor environments. The two methods above realize a booting process of a SoC chip in terms of hardware, however, these methods fail to solve the problem of improvement of the booting efficiency. In a large-scale embedded system, the system performance is influenced by the booting efficiency directly.

### SUMMARY

The main purpose of the disclosure is to provide a boot device for a SoC chip and the SoC chip to improve the booting efficiency of the SoC chip and improve the performance of the SoC chip.

The disclosure provides a boot device for a SoC chip, and the boot device includes a memory interface module, a DMA bus interface module, a boot processing module and a parameter configuration module, wherein
the memory interface module is provided with a memory bus interface and configured to connect with an external memory;
the DMA bus interface module is provided with a DMA bus interface and configured to transfer data in the external memory to a storing space which a destination address is corresponding to;
the boot processing module is connected with the memory interface module and the DMA bus interface module respectively, and is configured to send data reading and writing commands to the external memory through the memory interface module and transform data transferred by the external memory to data matched with the DMA bus interface module; and
the parameter configuration module is configured to configure parameters for the DMA bus interface module, the memory interface module and the boot processing module;
wherein the parameter configuration module may include a bus interface configuration module and a DMA configuration module, wherein
the bus interface configuration module is configured to configure parameters of the memory interface module and the DMA bus interface module, wherein the parameters include a data bus bit width, an address bus bit width parameter, a burst transmission type and a burst transmission length;
the DMA configuration module is configured to configure parameters of the DMA bus interface module, wherein the parameters include a transmission destination address and a data transmission length, and
an operation command parameter configuration module is configured to configure operation commands to send data reading and writing commands to the external memory.

Preferably, the bus interface configuration module may be further configured to configure the burst transmission type to be an 8-bit mode, a 16-bit mode, a 32-bit mode and a 64-bit mode.

Preferably, the bus interface configuration module may be further configured to configure the burst transmission length to be 1 to 16 bits.

Preferably, the DMA bus interface module may include Advanced Microcontroller Bus Architecture (AMBA) 2.0, AMBA3.0 or Open Core Protocol (OCP) interface master bus.

The disclosure provides a SoC chip, the SoC chip is provided with a boot device as described above.

Preferably, the SoC chip may further include any one of the boot device above.

The boot device for a SoC chip or the SoC chip of the disclosure can improve the booting efficiency and improve the performance of the system where the SoC chip is located by setting the DMA bus interface module and the parameter configuration module.

### BRIEF DESCRIPTION OF THE DRAWINGS

Fig. 1 is a structural diagram of a boot device for a SoC chip in an embodiment of the disclosure; and
Fig. 2 is a structural diagram of a boot device for a SoC chip in an embodiment of the disclosure.

### DETAILED DESCRIPTION

It should be understood that the embodiments described here are only used for explaining the disclosure, and not used for limiting the disclosure.

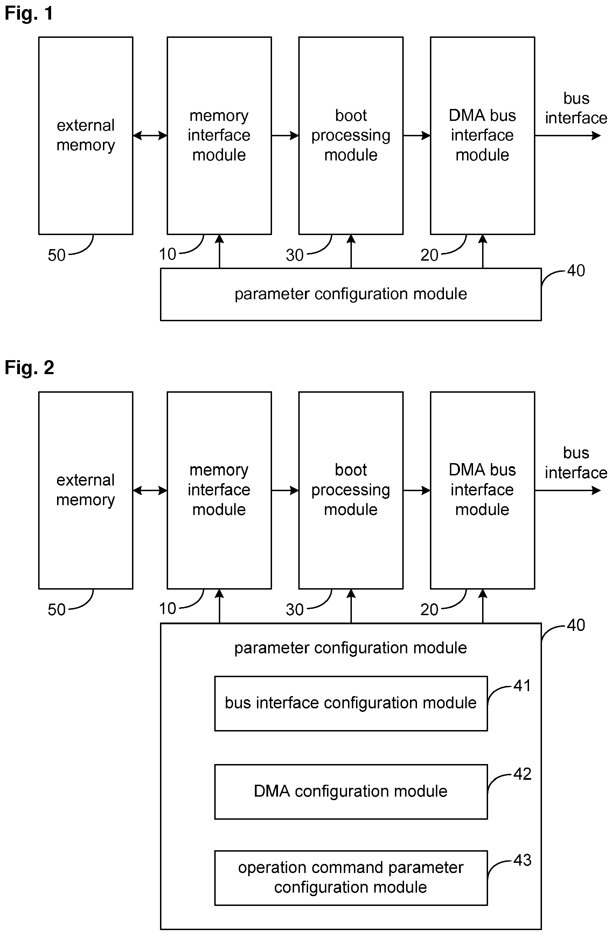

Fig. 1 shows a structure of a boot device for a SoC chip in an embodiment of the disclosure. The boot device includes: a memory interface module 10, a DMA bus interface module 20, a boot processing module 30 and a parameter configuration module 40, wherein
the memory interface module 10 is provided with a memory bus interface and configured to connect with an external memory 50; the external memory 50 may be a flash memory. The memory interface module 10 realizes a connection function of the SoC chip and an external flash chip and mainly includes a data bus, an address bus, a data indication signal etc.;
the bus interface module 20 is provided with a DMA bus interface and configured to transfer data in the external memory to a storing space which a destination address is corresponding to; DMA, which is a data transmission method between a memory and a peripheral device, is different from an interrupt transfer method and does not occupy the Central Processing Unit (CPU) time. Data can be read and written by such a method without commands executed by a processor and without an internal register of the processor, instead, the data is written into the memory or read out of the memory by a peripheral device directly through a data bus of a system to achieve extremely high transmission efficiency. When data transmission is performed by DMA, a bus cycle is generated by a device itself or by a DMA controller. A DMA device which generates a bus cycle itself is called a master device while a DMA device which relies on a DMA controller to generate a data transmission cycle is called a slave device. The disclosure applies a master device preferably. The DMA bus interface module 20 can transfer data from the external flash to a processor storing space which a destination address is corresponding to. The operation modes of the data bus and the address bus of the DMA bus interface module 20 can be configured;
the boot processing module 30 is connected with the memory interface module 10 and the DMA bus interface module 20 respectively, and is configured to send data reading and writing commands to the external memory 50 through the memory interface module 10 and transform data transferred by the external memory 50 to data matched with the DMA bus interface module 20; and
the parameter configuration module 40 is configured to configure parameters for the memory interface module 10, the DMA bus interface module 20, and the boot processing module 30. In an embodiment, the parameter configuration module 40 may configure parameters of the memory interface module 10, the bus interface module 20 and the boot processing module 30 through codes.

In the embodiment of the boot device of the disclosure, the transmission efficiency can be improved by setting the memory interface module 10, the DMA bus interface module 20, the boot processing module 30 and the parameter configuration module 40, and the parameters can be configured flexibly for each part, the booting efficiency is improved and the performance of the system where the SoC chip is located is improved.

With reference to Fig. 2, in an embodiment, the parameter configuration module 40 may include:
a bus interface configuration module 41 is configured to configure parameters of the memory interface module 10 and the DMA bus interface module 20; the configured parameters include a data bus bit width, an address bus bit width parameter, a burst transmission type and a burst transmission length; in an embodiment, the bus interface configuration module 41 may configure flash interface parameters and the flash interface parameters include a data bus bit width and an address bus bit width which can be configured to be modes of 8, 16, 32, 64 and etc. respectively, indicating that the data or address bus is 8 bits, 16 bits, 32 bits and 64 bits respectively. Further, the bus interface configuration module 41 may further realize configuration of the DMA interface bus parameters. The DMA interface bus parameters include a data bus bit width and an address bus bit width, which can be configured to be modes of 8, 16, 32, 64 and etc. respectively, indicating that the data or address bus is 8 bits, 16 bits, 32 bits and 64 bits respectively. Further, the bus interface configuration module 41 may further configure a burst transmission type, a burst transmission length, and etc. The burst transmission type may be configured to be an 8-bit mode, a 16-bit mode, a 16-bit mode and a 32-bit mode, and the burst transmission type length may be configured to be 1 to 16;
the DMA configuration module 42 is configured to configure parameters of the DMA bus interface module 20. The configured parameters include a transmission destination address and a data transmission length;
an operation command parameter configuration module 43 is configured to configure operation commands to send data reading and writing commands to the external memory 50. In an embodiment, the operation command parameter configuration module 43 may configure at least 10 operation commands to operate the external memory 50 (e.g. external flash). The 10 operation commands may be defined freely.

In the embodiments above, the DMA bus interface module 20 may be any buses. These buses include Advanced Microcontroller Bus Architecture (AMBA) 2.0, AMBA3.0 or Open Core Protocol (OCP) bus master interfaces, etc.

The disclosure further provides a SoC chip, including the boot device mentioned above. As shown in Fig. 1, the boot device includes: a memory interface module 10, a DMA bus interface module 20, a boot processing module 30 and a parameter configuration module 40, wherein
the memory interface module 10 is provided with a memory bus interface and configured to connect with an external memory 50; the external memory 50 may be a flash memory. The memory interface module 10 realizes a function of connection between the SoC chip and an external flash chip and mainly includes a data bus, an address bus, a data indication signal, etc.;
the DMA bus interface module 20 is provided with a DMA bus interface and configured to transfer data in the external memory to a storing space which a destination address is corresponding to; DMA, which is a data transmission method between a memory and a peripheral device, is different from an interrupt transfer method and does not occupy the CPU time. Data can be read and written by such a method without commands executed by a processor and without an internal register of the processor, instead, the data is written into the memory or read out of the memory by the peripheral device directly through the data bus of the system to achieve extremely high transmission efficiency. When data transmission is performed by DMA, a bus cycle is generated by a device itself or by a DMA controller. A DMA device which generates a bus cycle itself is called a master device while a DMA device which relies on a DMA controller to generate a data transmission cycle is called a slave device. The disclosure applies a master device preferably. The bus interface module 20 can transfer data from the external flash to the processor storing space which a destination address is corresponding to. The operation modes of the data bus and the address bus of the bus interface module 20 can be configured;
the boot processing module 30 is connected with the memory interface module 10 and the DMA bus interface module 20 respectively, and is configured to send data reading and writing commands to the external memory 50 through the memory interface module 10 and transform data transferred by the external memory 50 to the data matched with the DMA bus interface module 20; and
the parameter configuration module 40 is configured to configure parameters for the memory interface module 10, the DMA bus interface module 20, and the boot processing module 30. In an embodiment, the parameter configuration module 40 may configure parameters of the memory interface module 10, the bus interface module 20 and the boot processing module 30 through codes.

In addition, the SoC chip of the disclosure further includes the boot device as shown in Fig. 2.

In the embodiments of the disclosure, the transmission efficiency can be improved by setting boot device in the SoC chip, and parameters can be configured flexibly for each part, the booting efficiency is improved and the performance of the system where the SoC chip locates is improved.

What described above are only preferred embodiments of the disclosure, but are not intended to limit the patent scope of the disclosure. Any equivalent structural or process flow modifications that are made on basis of the specification and the attached drawings of the disclosure, or any direct or indirect applications in other related technical fields shall also fall within the scope of patent protection of the disclosure.

## Claims

1. Boot device for a System on Chip (SoC) chip, comprising a memory interface module (10), a Direct Memory Access (DMA) bus interface module (20), a boot processing module (30) and a parameter configuration module (40), wherein
the memory interface module (10) is provided with a memory bus interface and configured to connect with an external memory (50);
the DMA bus interface module (20) is provided with a DMA bus interface and configured to transfer data in the external memory (50) to a storing space which a destination address is corresponding to; and
the boot processing module (30) is connected with the memory interface module (10) and the DMA bus interface module (20) respectively, and is configured to send data reading and writing commands to the external memory (50) through the memory interface module (10) and transform data transferred by the external memory (50) to data matched with the DMA bus interface module (20);
**characterized by**
the parameter configuration module (40) is configured to configure parameters for the DMA bus interface module (20), the memory interface module (10) and the boot processing module (30);
wherein the parameter configuration module (40) comprises a bus interface configuration module (41) and a DMA configuration module (42), wherein
the bus interface configuration module (41) is configured to configure parameters of the memory interface module (10) and the DMA bus interface module (20), wherein the parameters include a data bus bit width, an address bus bit width parameter, a burst transmission type and a burst transmission length;
the DMA configuration module (42) is configured to configure parameters of the DMA bus interface module (20), wherein the parameters include a transmission destination address and a data transmission length; and
an operation command parameter configuration module (43) is configured to configure operation commands to send data reading and writing commands to the external memory (50).

2. Boot device according to claim 1, wherein the bus interface configuration module (41) is further configured to configure the burst transmission type to be an 8-bit mode, a 16-bit mode, a 32-bit mode and a 64-bit mode.

3. Boot device according to claim 1, wherein the bus interface configuration module (41) is further configured to configure the burst transmission length to be 1 to 16 bits.

4. Boot device according to any one of claim 1 to claim 3, wherein the DMA bus interface module (20) comprises Advanced Microcontroller Bus Architecture (AMBA) 2.0, AMBA3.0 or Open Core Protocol (OCP) interface master bus.

5. System on Chip (SoC) chip, provided with the boot device according to claim 1.

6. SoC according to claim 5, wherein the SoC chip further comprises the boot device of any one of claim 2 to claim 4.

## Patentansprüche

1. Startvorrichtung für einen SoC (Systemchip)-Chip, umfassend ein Speicherschnittstellenmodul (10), ein Direktspeicherzugriffs (DMA)-Busschnittstellenmodul (20), ein Startverarbeitungsmodul (30) und ein Parameterkonfigurationsmodul (40), wobei
das Speicherschnittstellenmodul (10) mit einer Speicherbusschnittstelle versehen und zum Herstellen einer Verbindung mit einem externen Speicher (50) konfiguriert ist;
das DMA-Busschnittstellenmodul (20) mit einer DMA-Busschnittstelle versehen und so konfiguriert ist, dass es Daten im externen Speicher (50) an einen Speicherplatz überträgt, dem eine Zieladresse entspricht; und
das Startverarbeitungsmodul (30) mit dem Speicherschnittstellenmodul (10) bzw. dem DMA-Busschnittstellenmodul (20) verbunden und so konfiguriert ist, dass es Befehle zum Lesen und Schreiben von Daten durch das Speicherschnittstellenmodul (10) an den externen Speicher (50) sendet und Daten, die durch den externen Speicher (50) übertragen werden, in Daten umwandelt, die auf das DMA-Busschnittstellenmodul (20) abgestimmt sind;
**dadurch gekennzeichnet, dass**
das Parameterkonfigurationsmodul (40) so konfiguriert ist, dass es Parameter für das DMA-Busschnittstellenmodul (20), das Speicherschnittstellenmodul (10) und das Startverarbeitungsmodul (30) konfiguriert;
wobei das Parameterkonfigurationsmodul (40) ein Busschnittstellenkonfigurationsmodul (41) und ein DMA-Konfigurationsmodul (42) umfasst, wobei
das Busschnittstellenkonfigurationsmodul (41) zum Konfigurieren von Parametern des Speicherschnittstellenmoduls (10) und des DMA-Busschnittstellenmoduls (20) konfiguriert ist, wobei die Parameter eine Datenbus-Bitbreite, einen Adressbus-Bitbreitenparameter, einen Burst-Übertragungstyp und eine Burst-Übertragungslänge umfassen;
das DMA-Konfigurationsmodul (42) zum Konfigurieren von Parametern des DMA-Busschnittstellenmoduls (20) konfiguriert ist, wobei die Parameter Übertragungszieladresse und eine Datenübertragungslänge umfassen; und
ein Betriebsbefehlsparameter-Konfigurationsmodul (43) so konfiguriert ist, dass es Betriebsbefehle konfiguriert, um Befehle zum Lesen und Schreiben von Daten an den externen Speicher (50) zu senden.

2. Startvorrichtung nach Anspruch 1, wobei das Busschnittstellenkonfigurationsmodul (41) ferner so konfiguriert ist, dass es den Burst-Übertragungstyp so konfiguriert, dass er ein 8-Bit-Modus, ein 16-Bit-Modus, ein 32-Bit-Modus und ein 64-Bit-Modus ist.

3. Startvorrichtung nach Anspruch 1, wobei das Busschnittstellenkonfigurationsmodul (41) ferner so konfiguriert ist, dass es die Burst-Übertragungslänge so konfiguriert, dass sie 1 bis 16 Bits beträgt.

4. Startvorrichtung nach einem der Ansprüche 1 bis 3, wobei das DMA-Busschnittstellenmodul (20) einen AMBA (Advanced Microcontroller Bus Architecture) 2.0-, einen AMBA 3.0- oder einen OCP (Open Core Protocol)-Schnittstellen-Masterbus umfasst.

5. SoC (Systemchip)-Chip, versehen mit der Startvorrichtung nach Anspruch 1.

6. SoC nach Anspruch 5, wobei der SoC-Chip ferner die Startvorrichtung nach einem der Ansprüche 2 bis 4 umfasst.

## Revendications

1. Dispositif d'amorce pour une puce de système sur puce (SoC), comprenant un module d'interface de mémoire (10), un module d'interface de bus d'accès direct en mémoire (DMA) (20), un module de traitement d'amorce (30) et un module de configuration de paramètres (40), dans lequel :
le module d'interface de mémoire (10) est doté d'une interface de bus de mémoire, et est configuré de manière à se connecter à une mémoire externe (50) ;
le module d'interface de bus d'accès DMA (20) est doté d'une interface de bus d'accès DMA et est configuré de manière à transférer des données dans la mémoire externe (50) vers un espace de stockage auquel une adresse de destination correspond ; et
le module de traitement d'amorce (30) est connecté au module d'interface de mémoire (10) et au module d'interface de bus d'accès DMA (20), respectivement, et est configuré de manière à envoyer des instructions de lecture et d'écriture de données à la mémoire externe (50) par le biais du module d'interface de mémoire (10), et à transformer des données transférées par la mémoire externe (50) en des données en correspondance avec le module d'interface de bus d'accès DMA (20) ;
**caractérisé en ce que :**
le module de configuration de paramètres (40) est configuré de manière à configurer des paramètres pour le module d'interface de bus d'accès DMA (20), le module d'interface de mémoire (10) et le module de traitement d'amorce (30) ;
dans lequel le module de configuration de paramètres (40) comporte un module de configuration d'interface de bus (41) et un module de configuration d'accès DMA (42), dans lequel :
le module de configuration d'interface de bus (41) est configuré de manière à configurer des paramètres du module d'interface de mémoire (10) et du module d'interface de bus d'accès DMA (20), dans lequel les paramètres incluent une largeur de bits de bus de données, un paramètre de largeur de bits de bus d'adresse, un type de transmission par salves et une durée de transmission par salves ;
le module de configuration d'accès DMA (42) est configuré de manière à configurer des paramètres du module d'interface de bus d'accès DMA (20), dans lequel les paramètres incluent une adresse de destination de transmission et une durée de transmission de données ; et
un module de configuration de paramètres d'instructions de fonctionnement (43) est configuré de manière à configurer des instructions de fonctionnement visant à envoyer des instructions de lecture et d'écriture de données à la mémoire externe (50).

2. Dispositif d'amorce selon la revendication 1, dans lequel le module de configuration d'interface de bus (41) est en outre configuré de manière à configurer le type de transmission par salves afin qu'il corresponde à un mode « 8 bits », à un mode « 16 bits », à un mode « 32 bits » et à un mode « 64 bits ».

3. Dispositif d'amorce selon la revendication 1, dans lequel le module de configuration d'interface de bus (41) est en outre configuré de manière à configurer la durée de transmission par salves sur une valeur allant de 1 à 16 bits.

4. Dispositif d'amorce selon l'une quelconque des revendications 1 à 3, dans lequel le module d'interface de bus d'accès DMA (20) comporte une architecture de bus de microcontrôleur avancée (AMBA) 2.0, une architecture AMBA 3.0 ou un bus maître d'interface de protocole « Open Core » (OCP).

5. Puce de système sur puce (SoC) doté du dispositif d'amorce selon la revendication 1.

6. Système SoC selon la revendication 5, dans lequel la puce de système SoC comporte en outre le dispositif d'amorce selon l'une quelconque des revendications 2 à 4.
